# EUROPÄISCHE PATENTSCHRIFT

(11) **EP 2 084 414 B1**
(45) Veröffentlichungstag und Bekanntmachung des Hinweises auf die Patenterteilung: **30.12.2009**
(21) Anmeldenummer: 07821962.3
(22) Anmeldetag: 29.10.2007
(51) Int. Cl.: F16C 29/02, F04B 35/00, F04B 39/02

(54) **GASDRUCKLAGER UND VERFAHREN ZU SEINER HERSTELLUNG**
GAS THRUST BEARING AND ASSOCIATED PRODUCTION METHOD
PALIER À GAZ SOUS PRESSION ET PROCÉDÉ DE PRODUCTION

(30) Priorität: 07.11.2006 DE 102006052450
(43) Veröffentlichungstag der Anmeldung: 05.08.2009
(73) Patentinhaber: BSH Bosch und Siemens Hausgeräte GmbH, 81739 München (DE)
(72) Erfinder: SCHUBERT, Jan-Grigor, 89250 Senden (DE); GIACCHI, Marco, 73550 Waldstetten (DE); LERCHENMÜLLER, Klaus, 87549 Rettenberg (DE)
(86) Internationale Anmeldenummer: PCT/EP2007/061604
(87) Internationale Veröffentlichungsnummer: WO 2008/055799

(56) Entgegenhaltungen:
- AU-B2- 445 469
- DE-A1-102004 061 940
- FR-A- 1 545 910
- GB-A- 1 262 824

## Beschreibung

Die vorliegende Erfindung betrifft ein Gasdrucklager mit einer Lagerbuchse, die einen Hohlraum zur Aufnahme eines gelagerten Körpers umgibt und in deren Wandung eine Vielzahl von außenseitig mit Druckgas beaufschlagbaren Durchgängen gebildet ist, sowie ein Verfahren zur Herstellung eines solchen Gasdrucklagers. Ein solches Gasdrucklager und ein Herstellungsverfahren dafür sind aus EP 0 708 262 A1 bekannt.

Die Wirkung des Gasdrucklagers beruht darauf, dass Druckgas durch die Durchgänge in einen Spalt zwischen der Lagerbuchse und dem darin gelagerten Körper eindringt und in dem Spalt einen Überdruck aufbaut. Dieser Spalt muss eng sein, um einen für die Erzeugung des Überdrucks erforderlichen ausreichenden Strömungswiderstand darzustellen. Auch die Versorgungsdurchgänge müssen eng sein, einerseits um den Druckgasdurchsatz des Lagers zu begrenzen, andererseits, um zu verhindern, dass wenn eine Auslenkung des gelagerten Körpers lokal zu einer Verengung des Spaltes zwischen dem Körper und der Lagerbuchse und dementsprechend zu einer Verdichtung des Gases in dem verengten Bereich führt, diese Druckerhöhung durch einen Rückfluss des Gases aus dem Spalt durch die Versorgungsdurchgänge nach außen abgebaut wird.

Die Erzeugung hinreichend enger Versorgungsdurchgänge, insbesondere mit Durchmessern in einem Bereich von 25 µm und darunter, wirft erhebliche technische Schwierigkeiten auf. Die eingangs genannte EP 0 708 262 A1 lehrt, solche Durchgänge mittels eines Laserstrahles zu bohren. Dieser Ansatz ist aus mehreren Gründen unbefriedigend. Zum einen muss jeder Durchgang zeitaufwändig einzeln gebohrt werden, was die Fertigung teuer macht. Zum anderen ist es zwar wünschenswert, zur Vermeidung von Turbulenzen ein großes Verhältnis von Durchgangslänge zu -durchmesser zu erzielen, doch ist die Schichtdicke, die mit einem Laser gebohrt werden kann, einerseits dadurch begrenzt, dass der Durchmesser des Laserstrahles vor und hinter einem Fokus um so stärker divergiert, je schärfer der Fokus ist, so dass bei einer zu großen Bohrtiefe ein geringer Bohrungsdurchmesser nicht auf der gesamten Durchgangslänge kontrollierbar aufrechterhalten werden kann. Hinzu kommt die Neigung des vom Laser abgetragenen Materials, sich bei zu großer Bohrtiefe an den Seitenwänden des Bohrloches abzulagern. Dies macht es erforderlich, an den Wänden der Lagerbuchse vorab abgeschwächte Bereiche zu bilden, die dünn genug sind, um darin mit dem Laser bohren zu können. Diese Bereiche beeinträchtigen jedoch die Belastbarkeit und Formbeständigkeit des Lagers erheblich.

Ziel der vorliegenden Erfindung ist, ein Gasdrucklager und ein Herstellungsverfahren dafür anzugeben, die die preiswerte Fertigung eines Gasdrucklagers mit trotz engem Querschnitt der Versorgungsdurchgänge hoher Formbeständigkeit ermöglichen.

Die Aufgabe wird zum einen dadurch gelöst, dass bei einem Gasdrucklager mit einer Lagerbuchse, die einen Hohlraum zur Aufnahme eines gelagerten Körpers umgibt und in deren Wandung eine Vielzahl von außenseitig mit Druckgas beaufschlagbaren Versorgungsdurchgängen gebildet sind, die Lagerbuchse aus einer Mehrzahl von Elementen zusammengefügt ist und wenigstens einige der Versorgungsdurchgänge durch Rillen in einander zugewandten Oberflächen jeweils benachbarter Elemente gebildet sind. Indem die Durchgänge zunächst in Form von oberflächlichen Rillen realisiert werden, ist es möglich, einen sehr engen Querschnitt der Durchgänge über eine große, im Prinzip beliebige Länge aufrecht zu erhalten. Die Elemente können daher eine beträchtliche Wandstärke und eine dementsprechend hohe Formstabilität aufweisen.

Um die Rillen zu Durchgängen zu vervollständigen, kann vorgesehen sein, dass die einander zugewandten Oberflächen jeweils benachbarter Elemente einander berühren.

Alternativ kann auch zwischen den einander zugewandten Oberflächen jeweils ein Dichtring von vorzugsweise rechteckigem Querschnitt angebracht sein. Ein solcher Dichtring kann ein gewisses Maß an plastischer Verformbarkeit aufweisen, die es ermöglicht, großflächige Unebenheiten von geringer Tiefe der sich gegenüberliegenden Oberflächen auszugleichen, ohne dabei jedoch in die Rillen einzudringen und diese zu verschließen oder zu verengen.

Vorzugsweise sind die Elemente in Längsrichtung der Lagerbuchse aufeinander folgend angeordnet.

Um einen korrekten Zusammenbau der Elemente zu erleichtern, kann vorgesehen sein, dass die einander benachbarten Elemente formschlüssig ineinander greifen.

Insbesondere ist bevorzugt, dass eine die Rillen tragende Stirnfläche eines der Elemente in eine Aussparung eines anderen Elementes eingesteckt ist.

Um eine zuverlässige Druckgasversorgung der Rillen an der Stirnfläche zu gewährleisten, verlaufen die Rillen zweckmäßigerweise insgesamt gewinkelt über die Stirnfläche und über eine Mantelfläche des hohlzylindrischen einen Elementes auf wenigstens einem Teil von dessen axialer Ausdehnung.

Ein Zusammenhalt der einzelnen Elemente ist auf einfache Weise dadurch gewährleistet, dass die Lagerbuchse in einem rohrförmigen Gehäuse gehalten ist.

Die Zahl der Elemente der Lagerbuchse ist vorzugsweise wenigstens drei, so dass wenigstens zwei Paare von einander gegenüberliegenden Oberflächen von Elementen existieren, an denen die Durchgänge gebildet sein können. Ferner ist die Zahl der Elemente der Lagerbuchse vorzugsweise ungerade, so dass eine oder mehrere Gruppen von drei benachbarten Elementen existieren können. In einer solchen Gruppe hat vorzugsweise das mittlere Element eine kleinere Außenabmessung als die beiden anderen es berührenden Elemente, so dass rings um das mittlere Element Platz für einen Versorgungskanal ist, der zwischen dem mittleren Element und den beiden ihm benachbarten Elementen verlaufende Versorgungsdurchgänge mit Druckgas speist.

Um die Versorgungsdurchgänge von einem Längsende des Gasdrucklagers her mit Druckgas zu speisen, kann ein Druckgasversorgungskanal vorgesehen sein, der sich in der Längsrichtung erstreckt und von den Elementen der Lagerbuchse und dem Gehäuse begrenzt ist. Alternativ kann auch eine durch das Gehäuse verlaufende Druckgasversorgungsleitung vorgesehen sein, die ein Ende an einer Stirnseite des Gehäuses und ein anderes Ende in Höhe des mittleren Elementes hat.

Die Rillen können auf einfache und preiswerte Weise durch Verformen gebildet sein. Dies ermöglicht die Erzeugung sämtlicher an einer von zwei einander zugewandten Oberflächen vorgesehenen Rillen mit minimalem Zeit- und Kostenaufwand durch einfache Werkzeuge mit hoher Standzeit.

Die Aufgabe wird ferner gelöst durch ein Verfahren zum Herstellen eines Gasdrucklagers, das die folgenden Schritte aufweist:
a) Bereitstellen von mehreren Elementen, die zu einer einen Hohlraum umgebenden Lagerhülse zusammenfügbar sind;
b) Erzeugen von Rillen in wenigstens einer Oberfläche wenigstens eines der Elemente, die im zusammengefügten Zustand einer Oberfläche eines benachbarten Elementes zugewandt ist; und
c) Zusammenfügen der Elemente zu der Lagerhülse.

Die einander zugewandten Oberflächen können direkt miteinander in Kontakt gebracht werden, oder es kann ein Dichtring zwischen sie eingefügt werden.

Die Rillen werden vorzugsweise durch Prägen erzeugt.

Ein weiterer Verfahrensschritt kann das Einbringen der Elemente in ein rohrförmiges Gehäuse sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen axialen Schnitt durch einen Verdichter mit einem Druckgaslager gemäß der vorliegenden Erfindung;
- Fig. 2: einen Schnitt durch den Verdichter der Fig. 1 entlang der in Fig. 1 mit II-II bezeichneten Ebene;
- Fig. 3: eine stirnseitige Ansicht eines Elementes der Lagerbuchse aus Fig. 1;
- Fig. 4: einen axialen Schnitt durch das in Fig. 3 gezeigte Element;
- Fig. 5: einen zu Fig. 1 analogen Schnitt durch einen Verdichter mit einem Gasdrucklager gemäß einer zweiten Ausgestaltung der Erfindung;
- Fig. 6: einen Schnitt entlang der in Fig. 5 mit VI-VI bezeichneten Ebene; und
- Fig. 7: eine schematische Darstellung eines Antriebsaggregates für den Verdichter.

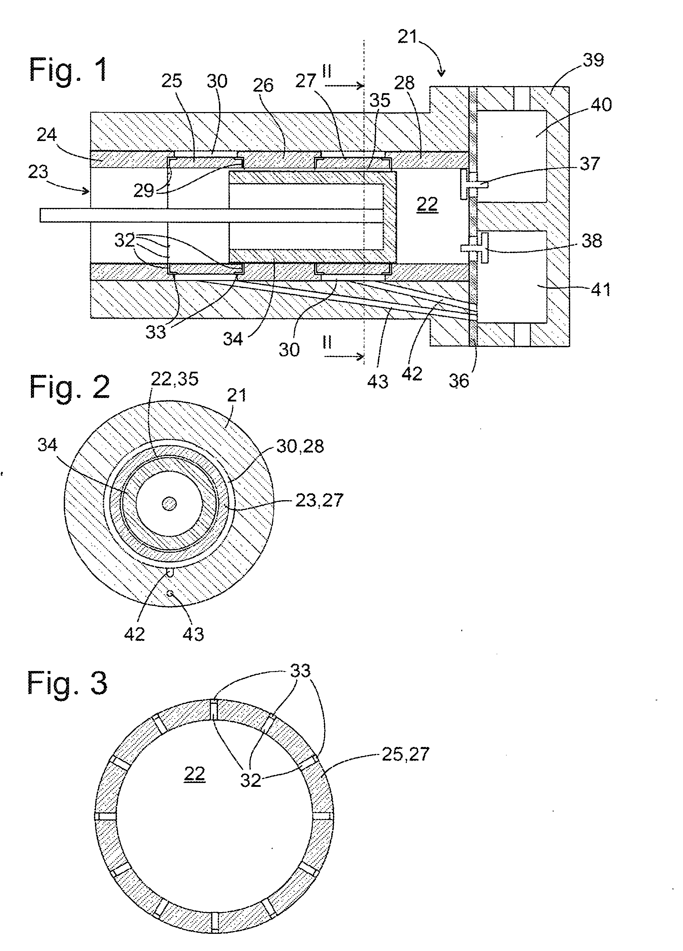

Der in Fig. 1 in einem axialen Schnitt und in Fig. 2 in einem radialen Schnitt gezeigte Verdichter, der im vorliegenden Fall als Linearverdichter ausgebildet ist, hat ein Gehäuse 21, in dem eine hohlzylindrische, eine Arbeitskammer 22 begrenzende Lagerbuchse 23 aufgenommen ist. Die Lagerbuchse 23 ist aus einer ungeraden Anzahl, hier fünf Stück, von in axialer Richtung aufeinander folgenden, ringförmigen bzw. hohlzylindrischen Elementen 24, 25, 26, 27, 28 zusammengefügt. Die beiden äußeren Elemente 24, 28 und das mittlere Element 26 der Anordnung haben jeweils an einander gegenüberliegenden Stirnflächen 29 ringförmige Aussparungen, in welche Endbereiche der dazwischenliegenden Elemente 25, 27 eingreifen. Der Innendurchmesser aller Elemente 24 bis 28 ist exakt gleich, so dass ihre Innenflächen bündig einander anschließen. Der Außendurchmesser der Elemente 25, 27 ist jeweils kleiner als der der benachbarten Elemente 24, 26, 28, so dass die Lagerbuchse 23 an ihrer Außenfläche zwei umlaufende Nuten 30 jeweils in Höhe der Elemente 25, 27 aufweist.

Die Außenflächen der Elemente 24, 26, 28 sind radial spielfrei in Kontakt mit der Innenfläche des rohrförmigen Gehäuses 21 gehalten und in axialer Richtung reibschlüssig, beispielsweise durch Aufschrumpfen des Gehäuses 21 auf die Elemente 24, 26, 28, fixiert. Die Elemente 25, 27 wiederum sind durch spielfreien Eingriff in die Aussparungen der Elemente 24, 26, 28 fixiert.

Wie in Fig. 3 zu sehen, sind die Elemente 25, 27 an ihren Stirnflächen 29 mit einer Vielzahl von radial ausgerichteten Rillen 32 versehen, von denen jeweils ein inneres Ende auf die Arbeitskammer 22 mündet und ein äußeres Ende in eine sich in axialer Richtung über die Außenfläche des Elementes 25 bzw. 27 erstreckende Rille 33 übergeht. Breite und Tiefe der Rillen 32, 33 beträgt jeweils maximal wenige 10 µm, ihre Länge kann einige Millimeter betragen. Wenn die Elemente 24 bis 28 zusammengefügt sind, reichen die axialen Rillen 33 jeweils aus den Aussparungen der Elemente 24, 26 oder 28 heraus. So bilden die Nuten 32, 33 zusammen mit den gegenüberliegenden Stirnflächen 29 der Elemente 24, 26, 28 Versorgungsdurchgänge, über die Nuten 30 mit der Arbeitskammer 22 kommunizieren.

In der Arbeitskammer 22 ist ein Kolben 34 axial verschiebbar angeordnet. Der Durchmesser des Kolbens 34 beträgt ca. 30 mm und ist um ca. 10 bis 20 µm kleiner als der Innendurchmesser der Elemente 24 bis 28, so dass, wenn der Kolben 34 konzentrisch zu der Lagerbuchse 23 angeordnet ist, ein Spalt 35 von 5 bis 10 µm Breite den Kolben 34 ringsum von der Innenfläche der Lagerbuchse 23 trennt. In diesen Spalt 35 münden einige der Rillen 32.

Die Arbeitskammer 22 ist an einer Stirnseite durch ein an einen umlaufenden Flansch des Gehäuses 21 angeschweißtes Federblech 36 verschlossen. In dem Federblech 36 sind in jeweils entgegengesetzte Richtungen durchlässige Rückschlagventile 37, 38 gebildet. An einer von der Arbeitskammer 22 abgewandten Seite des Federbleches 36 ist eine Kappe 39 montiert, in der zwei Kammern 40, 41 ausgespart sind. Eine Bewegung des Kolbens 34 von dem Federblech 36 fort saugt Gas aus der Kammer 40 durch das Ventil 38 in die Arbeitskammer 22. Eine anschließende Bewegung des Kolbens 34 auf das Federblech 36 zu, verdichtet das Gas in der Arbeitskammer 22 und presst es schließlich durch das Ventil 38 in die Kammer 41.

Von der Kammer 41 aus erstrecken sich gebohrte Druckgasversorgungsleitungen 42, 43 durch das Federblech 36 und das rohrförmige Gehäuseteil 31 zu den Nuten 30. Ein Überdruck in der Kammer 41 breitet sich über die Druckgasversorgungsleitungen 42, 43 bis in die Nuten 30 aus, so dass Gas durch die Rillen 33, 32 in die Arbeitskammer 22 zurückströmt und so ein Gaskissen bildet, welches den Kolben 34 ohne Kontakt mit der Lagerbuchse 23 führt.

Wie man leicht sieht, ist ein Verdichter mit verringerter Länge oder verringerter Zahl von Versorgungsdurchgängen leicht realisierbar, indem die Elemente 26, 27 weggelassen und das Element 25 direkt in die Aussparung des Elements 28 eingefügt wird. Entsprechend kann durch Einfügen zusätzlicher Elementpaare 26, 27 und Schaffung von die jeweils resultierenden Nuten 30 speisenden Druckgasversorgungsleitungen ein Verdichter mit größerer Länge und/oder größerer Zahl von Versorgungsdurchgängen geschaffen werden.

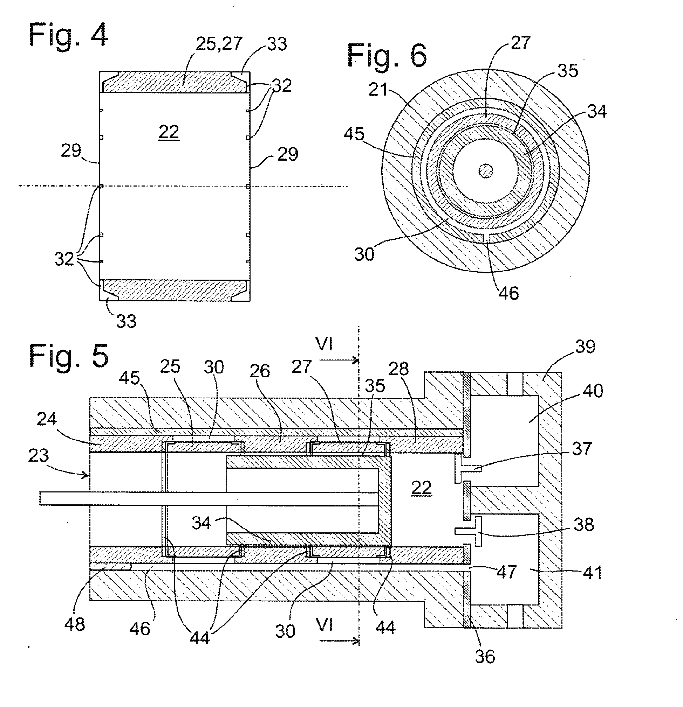

Fig. 4 zeigt einen vergrößerten axialen Schnitt durch eines der Elemente 25, 27. In diesem Schnitt ist zu erkennen, dass die Tiefe der sich über die Außenfläche des Elementes 25, 27 erstreckenden Rillen 33 mit zunehmender Entfernung von der Stirnfläche 29, von der sie ausgehen, abnimmt. Diese Formgebung der Rillen hat zwei Vorteile, zum einen ermöglicht sie es, die Rillen 32, 33 in einem gemeinsamen Arbeitsgang durch Prägen mit Hilfe von (nicht dargestellten) Stempeln zu erzeugen, die gegen die Stirnflächen 29 des Elementes 25, 27 gepresst werden. Zum anderen wird eine unnötig scharfe, zu Turbulenz und Druckabfall führende Umlenkung des Gasstromes am Übergang zwischen den Rillen 32, 33 vermieden, indem diese stumpfwinklig aufeinander stoßen.

Fig. 5 zeigt einen zu Fig. 1 analogen Schnitt durch eine zweite Ausgestaltung eines Gasdrucklagers, die sich von der in Fig. 1 gezeigten in zwei unabhängig voneinander realisierbaren Aspekten unterscheidet. Der erste Aspekt ist das Vorhandensein von Dichtringen 44 mit rechteckigem Querschnitt, die jeweils in den Aussparungen der Elemente 24, 26, 28 die Stirnflächen 29 der eingreifenden Elemente 25, 27 abdeckend angeordnet sind. Die Dichtringe 44 sind geringfügig plastisch verformbar, so dass sie zwar nicht in die Rillen 32 eindringen und deren Querschnitt verengen, dass sie aber großflächige Unebenheiten geringer Amplitude zwischen den sich gegenüberliegenden Stirnflächen der Elemente ausgleichen können und so verhindern, dass Druckgas durch abseits der Rillen 32, 33 verlaufende Spalte aus einer der Nuten 30 in die Arbeitskammer 22 gelangt.

Der zweite Aspekt ist, dass die die Lagerbuchse 23 bildenden Elemente 24 bis 28 in einer geschlitzten zylindrischen Hülse 45 aufgenommen sind, die ihrerseits an der Innenfläche des rohrförmigen Gehäuseteiles 31 anliegt. Indem der Schlitz 46 der Hülse 45 mit einem Durchgang 47 des Federbleches 36 fluchtet und an einem vom Federblech 36 abgewandten Ende zum Beispiel durch einen Kunstharzstopfen 48 dicht verschlossen ist, kann Druckgas aus der Kammer 41 zu sämtlichen Nuten 30 der Lagerbuchse 23 gelangen, ohne dass diese jeweils durch einzelne Bohrungen 40 bzw. 41, wie in Fig. 1 gezeigt, erschlossen werden müssten. Die Ausgestaltung der Fig. 5 ist daher insbesondere dann zweckmäßig, wenn die Lagerbuchse 23 aus einer großen Zahl von aufeinanderfolgenden Elementen zusammengesetzt ist.

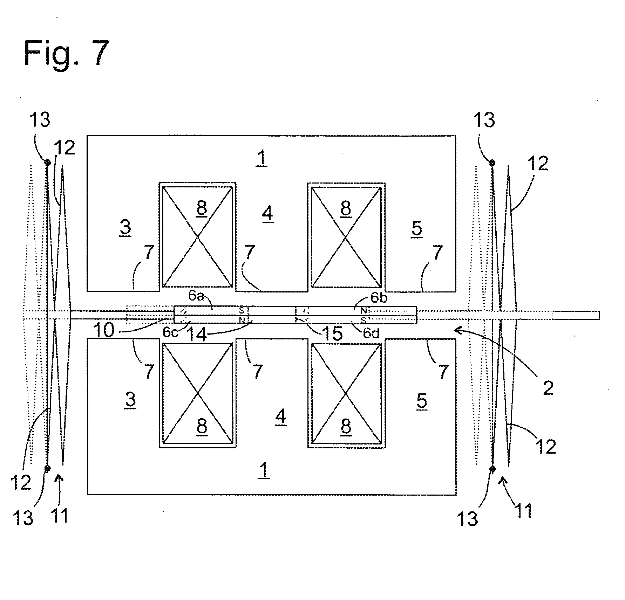

Fig. 7 zeigt schematisch ein Antriebsaggregat, das zum Antreiben der oszillierenden Bewegung des Kolbens 36 einsetzbar ist. Es umfasst zwei E-förmige Joche 1 mit drei sich paarweise gegenüberliegenden Armen 3, 4, 5. Die einander zugewandten Enden der Arme 3, 4, 5 bilden jeweils einen Luftspalt 2 begrenzende Polschuhe 7. Um die mittleren Arme 4 herum ist jeweils eine Erregerwicklung 8 angebracht. Die zwei Erregerwicklungen 8 sind durch eine Steuerschaltung mit Strom beaufschlagbar, wobei die Stromrichtung in den beiden Erregerwicklungen 8 jeweils so festgelegt ist, dass die einander gegenüberliegenden Polschuhe 7 der mittleren Arme 4 ungleichnamige Magnetpole bilden. Die Polschuhe der äußeren Arme 3 und 5 bilden jeweils zum benachbarten mittleren Arm 4 ungleichnamige Magnetpole.

In dem Luftspalt 2 ist ein Anker 10 an zwei Federn 11 zwischen einem oberen und einem unteren (beziehungsweise einem rechten und linken Umkehrpunkt in der Darstellung der Fig. 7) Umkehrpunkt reversierend beweglich aufgehängt. Die Stellung des Ankers 10 am oberen Umkehrpunkt ist mit durchgezogenen Linien, die am unteren Umkehrpunkt gestrichelt dargestellt. Die Federn 11 sind jeweils aus einem Blechstück ausgestanzte Blattfedern mit mehreren zickzackförmig verlaufenden Armen 12. Die Arme 12 einer Feder 11 erstrecken sich jeweils spiegelbildlich zueinander von einem zentralen Angriffspunkt an dem Anker 10 zu Aufhängungspunkten 13 an einem nicht dargestellten starren Gestell, an dem auch die Joche 1 und der Verdichter verankert sind. Durch diese Gestaltung sind die Federn 11 in Längsrichtung des Ankers 10 und in jeder dazu orthogonalen Richtung schwer verformbar, so dass sie den Anker 10 in seiner Längsrichtung reversierbar führen.

Der im wesentlichen stabförmige Anker 10 umfasst in seinem mittleren Bereich einen vierpoligen Permanentmagneten 14. Während in einer entspannten Stellung der Federn 11, in der die Arme 12 jeder Feder 11 im wesentlichen in einer gleichen Ebene liegen, der Magnet 14 zentral in dem Luftspalt 2 platziert ist und eine Grenzlinie 15 zwischen seinen in Fig. 1 linken und rechten Polen mittig durch die mittleren Arme 4 verläuft, wird durch Beaufschlagen der Wicklungen 8 mit einem Strom der Anker 10 je nach Stromrichtung nach links oder nach rechts ausgelenkt.

## Patentansprüche

1. Gasdrucklager mit einer Lagerbuchse (23), die einen Hohlraum (22) zur Aufnahme eines gelagerten Körpers (34) umgibt und in deren Wandung eine Mehrzahl von außenseitig mit Druckgas beaufschlagbaren Versorgungsdurchgängen (32, 33) gebildet sind, **dadurch gekennzeichnet, dass** die Lagerbuchse (23) aus einer Mehrzahl von Elementen (24, 25, 26, 27, 28) zusammengefügt ist und wenigstens einige der Versorgungsdurchgänge (32, 33) durch Rillen (32) in wenigstens einer der einander zugewandten Oberflächen (29) jeweils benachbarter der Elemente (24, 25, 26, 27, 28) gebildet sind.

2. Gasdrucklager nach Anspruch 1, **dadurch gekennzeichnet, dass** die Rillen (32) in einander zugewandten Oberflächen (29) jeweils benachbarter Elemente (24, 25, 26, 27, 28) gebildet sind.

3. Gasdrucklager nach Anspruch 1 oder 2, **dadurch gekennzeichnet, dass** die einander zugewandten Oberflächen (29) jeweils benachbarter der Elemente (24, 25, 26, 27, 28) einander berühren.

4. Gasdrucklager nach Anspruch 1 oder 2, **dadurch gekennzeichnet, dass** zwischen den einander zugewandten Oberflächen (29) jeweils benachbarter der Elemente (24, 25, 26, 27, 28) ein Dichtring (44) angebracht ist.

5. Gasdrucklager nach einem der vorhergehenden Ansprüche, **dadurch gekennzeichnet, dass** die Elemente (24, 25, 26, 27, 28) in Längsrichtung der Lagerbuchse (13) aufeinander folgend angeordnet sind.

6. Gasdrucklager nach einem der vorhergehenden Ansprüche, **dadurch gekennzeichnet, dass** die einander benachbarten Elemente (24, 25; 25, 26; ...; 27, 28) formschlüssig ineinander greifen.

7. Gasdrucklager nach Anspruch 6, **dadurch gekennzeichnet, dass** eine die Rillen (32) tragende Stirnfläche (29) eines der Elemente (25, 27) in eine Aussparung eines anderen Elements (24, 26, 28) eingesteckt ist.

8. Gasdrucklager nach Anspruch 7, **dadurch gekennzeichnet, dass** die Rillen (32, 33) gewinkelt über eine Stirnfläche (29) und eine Mantelfläche des hohlzylindrischen einen Elements (25, 27) verlaufen.

9. Gasdrucklager nach einem der vorhergehenden Ansprüche, **dadurch gekennzeichnet, dass** die Lagerbuchse (23) in einem rohrförmigen Gehäuse (21) gehalten ist.

10. Gasdrucklager nach Anspruch 9, **dadurch gekennzeichnet, dass** die Zahl der Elemente (24, 25, 26, 27, 28) der Lagerbuchse (23) wenigstens drei ist, wobei in einer Gruppe (24, 25, 26; 26, 27, 28) von drei Elementen das mittlere Element (25; 27) eine kleinere Außenabmessung hat als die beiden anderen es berührenden Elemente (24, 26; 26, 28).

11. Gasdrucklager nach Anspruch 9 oder 10, **dadurch gekennzeichnet, dass** wenigstens ein von den Elementen (24, 25, 26, 27,2 8) der Lagerbuchse (234) und dem Gehäuse (21) begrenzter Druckgasversorgungskanal (46) sich in der Längsrichtung erstreckt.

12. Gasdrucklager nach einem der Ansprüche 9 bis 111, **dadurch gekennzeichnet, dass** eine durch das Gehäuse (21) verlaufende Druckgasversorgungsleitung (42, 43) ein Ende an einer Stirnseite des Gehäuses (21) und ein anderes Ende in Höhe des mittleren Elements (25; 27) hat.

13. Gasdrucklager nach einem der vorhergehenden Ansprüche, **dadurch gekennzeichnet, dass** die Rillen (32, 33) durch Verformen gebildet sind.

14. Linearverdichter mit einem Gasdrucklager nach einem der Ansprüche 1 bis 13.

15. Verfahren zum Herstellen eines Gasdrucklagers mit den Schritten:
a) Bereitstellen von mehreren Elementen (24, 25, 26, 27, 28), die zu einer einen Hohlraum (22) umgebenden Lagerhülse (23) zusammenfügbar sind;
b) Erzeugen von Rillen (32, 33) in wenigstens einer Oberfläche (29) wenigstens eines der Elemente (25; 27), die im zusammengefügten Zustand einer Oberfläche eines benachbarten Elements (24; 26; 28) zugewandt ist; und
c) Zusammenfügen der Elemente (24, 25, 26, 27, 28) zu der Lagerhülse (23).

16. Verfahren nach Anspruch 15, **dadurch gekennzeichnet, dass** in Schritt c) die einander zugewandten Oberflächen (29) miteinander in Kontakt gebracht werden.

17. Verfahren nach Anspruch 15, **dadurch gekennzeichnet, dass** in Schritt c) ein Dichtring (44) zwischen die einander zugewandten Oberflächen (29) eingefügt wird.

18. Verfahren nach einem der Ansprüche 15 bis 17, **dadurch gekennzeichnet, dass** die Rillen (32, 33) geprägt werden.

19. Verfahren nach einem der Ansprüche 15 bis 18 mit dem zusätzlichen Schritt d) Einbringen der Elemente (24, 25, 26, 27, 28) in ein rohrförmiges Gehäuse (21).

## Claims

1. Gas thrust bearing with a bearing bush (23), which surrounds a cavity (22) for reception of a journalled body (34) and in the wall of which a plurality of supply passages (32, 33) externally chargeable with pressure gas is formed, **characterised in that** the bearing bush (23) is composed of a plurality of elements (24, 25, 26, 27, 28) and at least some of the supply passages (32, 33) are formed by grooves (32) in at least one of the mutually facing surfaces (29) of respectively adjacent ones of the elements (24, 25, 26, 27, 28).

2. Gas thrust bearing according to claim 1, **characterised in that** the grooves (32) are formed in mutually facing surfaces (29) of respectively adjacent elements (24, 25, 26, 27, 28).

3. Gas thrust bearing according to claim 1 or 2, **characterised in that** the mutually facing surfaces (29) of respectively adjacent ones of the elements (24, 25, 26, 27, 28) contact one another.

4. Gas thrust bearing according to claim 1 or 2, **characterised in that** a sealing ring (44) is mounted between the mutually adjacent surfaces (29) of respectively adjacent ones of the elements (24, 25, 26, 27, 28).

5. Gas thrust bearing according to any one of the preceding claims, **characterised in that** the elements (24, 25, 26, 27, 28) are arranged in succession in longitudinal direction of the bearing bush (13).

6. Gas thrust bearing according to any one of the preceding claims, **characterised in that** the mutually adjacent elements (24, 25; 25, 26; ...; 27, 28) mechanically positively interengage.

7. Gas thrust bearing according to claim 6, **characterised in that** an end surface (29), which carries the grooves (32), of one of the elements (25, 27) is inserted into a cut-out of another element (24, 26, 28).

8. Gas thrust bearing according to claim 7, **characterised in that** the grooves (32, 33) extend at an angle over an end surface (29) and a circumferential surface of the hollow-cylindrical one element (25, 27).

9. Gas thrust bearing according to any one of the preceding claims, **characterised in that** the bearing bush (23) is mounted in a tubular housing (21).

10. Gas thrust bearing according to claim 9, **characterised in that** the number of elements (24, 25, 26, 27, 28) of the bearing bush (23) is at least three, wherein in one group (24, 25, 26; 26, 27, 28) of the three elements the middle element (25; 27) has a smaller outer diameter than the two other elements (24, 26; 26, 28) contacting it.

11. Gas thrust bearing according to claim 9 or 10, **characterised in that** at least one of the elements (24, 25, 26, 27, 28) of the bearing bush (23) and pressure gas supply channel (46) bounding the housing (21) extend in longitudinal direction.

12. Gas thrust bearing according to any one of claims 9 to 11, **characterised in that** a pressure gas supply duct (42, 43) extending through the housing (21) has one end at an end face of the housing (21) and another end at the level of the centre element (25; 27).

13. Gas thrust bearing according to any one of the preceding claims, **characterised in that** the grooves (32, 33) are formed by deforming.

14. Linear compressor with a gas thrust bearing according to any one of claims 1 to 13.

15. Method of producing a gas thrust bearing, comprising the steps:
a) providing several elements (24, 25, 26, 27, 28), which can be combined to form a bearing sleeve (23) surrounding a cavity (22);
b) producing grooves (32, 33) in at least one surface (29) of at least one of the elements (25; 27), which surface in the joined-together state faces a surface of an adjacent element (24; 26; 28); and
c) joining together the elements (24, 25, 26, 27, 28) to form the bearing sleeve (23).

16. Method according to claim 15, **characterised in that** in step c) the mutually facing surfaces (29) are brought into contact with one another.

17. Method according to claim 15, **characterised in that** in step c) a sealing ring (44) is inserted between the mutually facing surfaces (29).

18. Method according to any one of claims 15 to 17, **characterised in that** the grooves (32, 33) are stamped.

19. Method according to any one of claims 15 to 18, with the additional step d) of inserting the elements (24, 25, 26, 27, 28) into a tubular housing (21).

## Revendications

1. Palier à pression de gaz comprenant un coussinet (23), qui entoure une cavité (22) pour recevoir un corps (34) fixé sur palier et dans la paroi duquel est formée une pluralité de passages d'alimentation (32, 33) pouvant être alimentés côté extérieur en gaz sous pression, **caractérisé en ce que** le coussinet (23) est assemblé à partir d'une pluralité d'éléments (24, 25, 26, 27, 28), et au moins certains des passages d'alimentation (32, 33) sont formés par des rainures (32) dans au moins l'une des surfaces (29) tournées les unes vers les autres d'éléments (24, 25, 26, 27, 28) respectivement voisins.

2. Palier à pression de gaz selon la revendication 1, **caractérisé en ce que** les rainures (32) sont formées dans des surfaces (29) tournées les unes vers les autres d'éléments (24, 25, 26, 27, 28) respectivement voisins.

3. Palier à pression de gaz selon la revendication 1 ou 2, **caractérisé en ce que** les surfaces (29) tournées les unes vers les autres d'éléments (24, 25, 26, 27, 28) respectivement voisins se touchent.

4. Palier à pression de gaz selon la revendication 1 ou 2, **caractérisé en ce qu'**une bague d'étanchéité (44) est disposée entre les surfaces (29) tournées les unes vers les autres d'éléments (24, 25, 26, 27, 28) respectivement voisins.

5. Palier à pression de gaz selon l'une quelconque des revendications précédentes, **caractérisé en ce que** les éléments (24, 25, 26, 27, 28) sont disposés dans le sens longitudinal du coussinet (23) en se succédant.

6. Palier à pression de gaz selon l'une quelconque des revendications précédentes, **caractérisé en ce que** les éléments (24, 25, 26, 27, 28) voisins les uns des autres s'engrènent les uns dans les autres par complémentarité de formes.

7. Palier à pression de gaz selon la revendication 6, **caractérisé en ce qu'**une face frontale (29), portant les rainures (32), de l'un des éléments (25, 27) est enfichée dans un évidement d'un autre élément (24, 26, 28).

8. Palier à pression de gaz selon la revendication 7, **caractérisé en ce que** les rainures (32, 33) sont agencées de façon coudée au-dessus d'une face frontale (29) et d'une surface d'enveloppe de l'élément (25, 27) cylindrique creux.

9. Palier à pression de gaz selon l'une quelconque des revendications précédentes, **caractérisé en ce que** le coussinet (23) est maintenu dans un boîtier (21) tubulaire.

10. Palier à pression de gaz selon la revendication 9, **caractérisé en ce que** le nombre des éléments (24, 25, 26, 27, 28) du coussinet (23) est au moins trois, l'élément (25 ; 27) central dans un groupe (24, 25, 26, 27, 28) de trois éléments ayant une dimension extérieure plus petite que les deux autres éléments (24, 26 ; 26, 28) qui le touchent.

11. Palier à pression de gaz selon la revendication 9 ou 10, **caractérisé en ce qu'**au moins un canal d'alimentation en gaz sous pression (46) délimité par les éléments (24, 25, 26, 27, 28) du coussinet (23) et le boîtier (21) s'étend dans la direction longitudinale.

12. Palier à pression de gaz selon l'une quelconque des revendications 9 à 11, **caractérisé en ce qu'**une conduite d'alimentation en gaz sous pression (42, 43) passant à travers le boîtier (21) a une extrémité sur une face frontale du boîtier (21) et une autre extrémité à la hauteur de l'élément (25 ; 27) central.

13. Palier à pression de gaz selon l'une quelconque des revendications précédentes, **caractérisé en ce que** les rainures (32, 33) sont formées par déformation.

14. Compresseur linéaire avec un palier à pression de gaz selon l'une quelconque des revendications 1 à 13.

15. Procédé pour fabriquer un palier à pression de gaz comprenant les étapes suivantes :
a) mise à disposition de plusieurs éléments (24, 25, 25, 27, 28), qui peuvent être assemblés pour former une douille de palier (23) entourant une cavité (22),
b) agencement de rainures (32, 33) dans au moins une surface (29) d'au moins un des éléments (25, 27) qui est tournée dans l'état assemblé vers une surface d'un élément (24 ; 26 ; 28) voisin ; et
c) assemblage des éléments (24, 25, 26, 27, 28) pour former la douille de palier (23).

16. Procédé selon la revendication 15, **caractérisé en ce que** les surfaces (29) tournées les unes vers les autres sont amenées en contact les unes avec les autres à l'étape c).

17. Procédé selon la revendication 15, **caractérisé en ce qu'**une bague d'étanchéité (44) est insérée entre les surfaces (29) tournées les unes vers les autres à l'étape c).

18. Procédé selon l'une quelconque des revendications 15 à 17, **caractérisé en ce que** les rainures (32, 33) sont gaufrées.

19. Procédé selon l'une quelconque des revendications 15 à 18 avec l'étape supplémentaire d) introduction des éléments (24, 25, 26, 27, 28) dans un boîtier (21) tubulaire.
